# EUROPÄISCHE PATENTSCHRIFT

(11) **EP 2 298 002 B1**
(45) Veröffentlichungstag und Bekanntmachung des Hinweises auf die Patenterteilung: **28.08.2013**
(21) Anmeldenummer: 09772051.0
(22) Anmeldetag: 18.05.2009
(51) Int. Cl.: H04W 48/02

(54) **VERFAHREN ZUR FESTLEGUNG EINES BEREICHES FÜR CLOSED SUBSCRIBER GROUP IDENTITIES FÜR EINEN OFFENEN NETZZUGANG**
METHOD FOR DEFINING A RANGE FOR CLOSED SUBSCRIBER GROUP IDENTITIES FOR AN OPEN NETWORK ACCESS POINT
PROCÉDÉ DE DÉTERMINATION D'UN DOMAINE RÉSERVÉ AUX IDENTITÉS D'UN GROUPE FERMÉ DE PARTICIPANTS POUR L'ACCÈS À UN RÉSEAU OUVERT

(30) Priorität: 03.07.2008 DE 102008031211
(43) Veröffentlichungstag der Anmeldung: 23.03.2011
(73) Patentinhaber: Deutsche Telekom AG, 53113 Bonn (DE)
(72) Erfinder: KURZ, Michael, A-1030 Wien (AT); ZARRI, Michele, NW2 5EN London (GB)
(74) Vertreter: Cohausz Hannig Borkowski Wißgott
(86) Internationale Anmeldenummer: PCT/EP2009/003517
(87) Internationale Veröffentlichungsnummer: WO 2010/000351

(56) Entgegenhaltungen:
- WO-A-2008/134281
- QUALCOMM EUROPE: "UTRA HNB Idle Mode (Re)selection and UE Access Control" 3GPP DRAFT; R2-083392, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG2, Nr. Warsaw, Poland; 20080630, 23. Juni 2008 (2008-06-23), XP050140786
- NTT DOCOMO ET AL: "CSG with limited open access" 3GPP DRAFT; R2-075150 CSG WITH LIMITED OPEN ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG2, Nr. Jeju; 20071105, 31. Oktober 2007 (2007-10-31), XP050137597
- VODAFONE: "Definition of Cell Identity and CSG identity for SIB1" 3GPP DRAFT; R2_083249_DEFINITION OF CELL IDENTITY AND CSG IDENTITY FOR SIB1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG2, Nr. Warsaw, Poland; 20080630, 23. Juni 2008 (2008-06-23), XP050141102
- "Universal Mobile Telecommunications System (UMTS); Evolved Universal Terrestrial Radio Access (E-UTRA) and Evolved Universal Terrestrial Radio Access (E-UTRAN); Overall description; Stage 2 (3GPP TS 36.300 version 8.5.0 Release 8); ETSI TS 136 300" ETSI STANDARD, EUROPEAN TELECOMMUNICATIONS STANDARDS INSTITUTE (ETSI), SOPHIA ANTIPOLIS CEDEX, FRANCE, Bd. 3-R2, Nr. V8.5.0, 1. Juli 2008 (2008-07-01), XP014042193

## Beschreibung

Die Erfindung betrifft ein Verfahren zum Betrieb einer oder mehrerer Funkzellen eines zellularen Mobilfunknetzes, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste von zugelassenen Zellkennungen in die jeweilige Funkzelle zur Nutzung der Dienste des Mobilfunknetzes einbuchen.

Weiter betrifft die Erfindung ein zellulares Mobilfunksystem aufweisend ein Mobilfunknetzwerk mit einer Mehrzahl von Funkzellen, in denen sich Mobilfunkendgeräte zur Nutzung der Dienste des Mobilfunksystems einbuchen können, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste zugelassenen Zellkennungen, in die jeweilige Funkzelle zur Nutzung der Dienste des Mobilfunknetzes einbuchen.

Ein Verfahren der genannten Gattung ist aus dem Dokument "UTRA HNB Idle Mode (Re)selection and UE Access Control", Qualcomm Europe, 3GPP DRAFT; R2-083392, 3GPP TSG-RAN WG2 Meeting #62-bis, Warsaw, Poland, 30th June - 4th July 2008, bekannt. Es beschreibt ein Verfahren, sogenannte HNBs (Home Node B), d.h. Femtozellen eines Mobilfunknetzwerks, die eigentlich für die private Nutzung vorbehalten sind, für die Allgemeinheit zu öffnen, wobei diese HNBs standardmäßig geöffnet sein können und bei Bedarf durch eine entsprechende Zugangsregelung von ihren Nutzern geschlossen werden können. Um dieses Ziel zu erreichen, wird in dem Dokument vorgeschlagen, einen Zugangsindikator zu verwenden, der in den von einer HNB übertragenen Systeminformationen, in der sogenannten SIB3-Nachricht der HNBs zusätzlich zu der Kennung für die geschlossene Teilnehmergruppe übertragen wird.

Ein ähnliches Verfahren wird in dem Dokument "CSG with limited open access", NTT DOCOMO et al, 3GPP DRAFT; R2-075150, 3GPP TSG-RAN WG2 #60, Jeju, Korea, 5th - 9th November 2007, vorgeschlagen. Es beschreibt, dass es von Vorteil wäre, wenn CSG-Zellen in den Systeminformationen einen Indikator enthielten, der anzeigt, ob sie einen öffentlichen Zugriff gewähren oder nicht. Eine konkrete Angabe, wie und wo dieser Indikator in den Systeminformationen verwendet werden soll, geht aus dem Dokument nicht hervor.

Es ist ferner bekannt, eine oder mehrere Funkzellen eines Mobilfunknetzes ausschließlich für eine geschlossene Teilnehmergruppe (Closed Subscriber Group CSG) zu beschränken. Ein Mobilfunkbetreiber kann aus funktechnischer Sicht eine Zelle oder eine Gruppe von Zellen als Teil einer geschlossenen Teilnehmergruppe "Closed Subscriber Group" (CSG) bestimmen. Diese Zellen sind bestimmt durch eine entsprechende Kennung (Closed Subscriber Group Identity -CSG ID). Ein mobiles Endgerät, d.h. ein Mobilfunkendgerät (Userequipment (UE) bzw. Mobiltelefon oder dergleichen) versucht auf eine Zelle zugehörig zu der geschlossenen Teilnehmergruppe CSG nur dann zuzugreifen, wenn die entsprechende Zellkennung (CSG ID) in einer Liste (Whitelist) von zulässigen Teilnehmergruppen respektive Funkzellen enthalten ist. Eine Weiße Liste oder Positivliste (Whitelist) bezeichnet im Gegensatz zu einer Schwarzen Liste (Blacklist) unter anderem Personen, Firmen und Elemente, die nach Meinung der Verfasser der Liste per se vertrauenswürdig sind. Diese Liste/n wird / werden gewartet und administriert vom Mobilfunkbetreiber, bei dem das Mobilfunkendgerät im entsprechenden Mobilfunknetzwerk (Home Public Land Mobile Network - HPLMN) subskribiert ist.

Nachteilig ist dabei, dass ohne Involvierung des Heimatnetzes HPLMN normalerweise in jenen Zellen, die der geschlossenen Teilnehmergruppe vorbehalten sind, kein Netzzugang für Anwender anderer Netze oder Unternehmen möglich ist.

Die Aufgabe der Erfindung ist es, ein Verfahren zum Betrieb einer oder mehrerer Funkzellen eines zellularen Mobilfunknetzes, sowie ein entsprechendes zellulares Mobilfunksystem mit einem Bereich von geschlossenen Teilnehmergruppenidentitäten, derart weiterzubilden, dass ein offner Netzzugang möglich ist.

Diese Aufgabe wird erfindungsgemäß durch das in den unabhängigen Ansprüchen angegebene Verfahren bzw. zellulare Mobilfunksystem gelöst. Vorteilhafte Weiterbildungen der Erfindung, sind in den abhängigen Ansprüchen angegeben.

Besonders vorteilhaft bei dem Verfahren zum Betrieb einer oder mehrerer Funkzellen eines zellularen Mobilfunknetzes, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste von zugelassenen Zellkennungen in die jeweilige Funkzelle zur Nutzung der Dienste des Mobilfunknetzes einbuchen, ist es, dass die Zellkennung variabel ist und anhand der Zellkennung feststellbar ist, ob ein Einbuchen und eine Nutzung der Netzdienste momentan auf die geschlossene Teilnehmergruppe beschränkt ist oder ob alternativ ein Einbuchen und eine Nutzung der Netzdienste für beliebige Teilnehmer freigegeben ist.

Bei dem zellularen Mobilfunksystem insbesondere zur Ausführung und Anwendung des erfindungsgemäßen Verfahrens, aufweisend ein Mobilfunknetzwerk mit einer Mehrzahl von Funkzellen, in denen sich Mobilfunkendgeräte zur Nutzung der Dienste des Mobilfunksystems einbuchen können, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste von zugelassenen Zellkennungen in die jeweilige Funkzelle zur Nutzung der Dienste des Mobilfunknetzes einbuchen, ist es besonders vorteilhaft, dass die Zellkennung variabel ist und anhand der Zellkennung feststellbar ist, ob ein Einbuchen und eine Nutzung der Netzdienste momentan auf die geschlossene Teilnehmergruppe beschränkt ist oder ob alternativ ein Einbuchen und eine Nutzung der Netzdienste für beliebige Teilnehmer freigegeben ist.

Dadurch dass die Zellkennung einer oder mehrerer Funkzellen eines zellularen Mobilfunknetzes variabel ist, kann die jeweilige Funkzelle temporär oder dauerhaft zur Nutzung auf eine geschlossene, Teilnehmergruppe als Closed Subscriber Group Identity (CSG ID) beschränkt werden oder alternativ für einen offenen Netzzugang freigeschaltet werden. Die jeweilige Zellkennung ist dabei Netzseitig administrierbar. Der Unterschied und besondere Vorteil gegenüber den bekannten Betriebsverfahren und bekannten zellularen Mobilfunksystemen ist es somit, dass die Zellkennung einer oder mehrerer Funkzellen des zellularen Mobilfunksystems variabel ausgestaltet wird und diese Variabilität ein Kennzeichen für eine Beschränkung des Netzzugangs oder einen offenen Netzzugang bildet.

Mit den Begriffen Mobilfunkendgerät bzw. mobiles Endgerät, insbesondere User Equipment (UE) oder Mobiltelefon, sind dabei jeweils auch die dem Mobilfunkendgerät zugeordneten teilnehmerspezifischen Teilnehmeridentifizierungsmodule gemeint, d.h. die Träger der Teilnehmeridentität (International Mobile Subscriber Identity - IMSI), somit beispielsweise auch Chipkarten oder andere Bauformen von Teilnehmeridentitätsmodulen (Subscriber Identity Module - SIM / USIM), aber auch Softwarelösungen wie beispielsweise ein virtuelles Teilnehmeridentitätsmodul (virtuelle SIM / USIM).

Vorzugsweise ist die Zellkennung variabel in dem ein Bit oder mehrere Bits oder eine Reihe von Bits der Zellkennung variiert wird / werden, insbesondere dass die Zellkennung eine Länge von 28 Bits aufweist.

Dadurch dass ein Bit oder eine bestimmte Reihe von Bits einer Zellkennung, d.h. einer CSG ID, anzeigt ob ein Zugriff auf Zellen zugehörig zu der geschlossenen Teilnehmergruppe mittels eines mobilen Endgerätes möglich ist, sogar wenn diese nicht in der so genannten Whitelist des mobilen Endgerätes eingetragen ist, ist es auf vorteilhafte und einfache Weise möglich, einen Bereich einer geschlossenen Teilnehmergruppe für einen offenen Netzzugang freizugeben oder gesperrt zu halten.

Vorzugsweise unterbleibt bei dem Verfahren und / oder dem System ein Abgleich mit der in dem Mobilfunkendgerät gespeicherten Positivliste von zugelassenen Zellkennungen, wenn ein bestimmtes Bit oder mehrere bestimmte Bits oder eine bestimmte Reihe von Bits der Zellkennung einen bestimmten Wert aufweisen. Wenn die Zellkennung, d.h. die CSG ID signalisiert, dass die Zelle für einen offenen Netzzugang zur Verfügung steht, kann ein Abgleich mit der in dem Mobilfunkendgerät gespeicherten Positivliste (Whitelist) unterbleiben und eine Nutzung der Netzdienste ist möglich, indem sich das Mobilfunkendgerät direkt in das Mobilfunknetz einbucht.

Vorzugsweise ist das Mobilfunkendgerät mittels einer Teilnehmeridentität (International Mobile Subscriber Identity - IMSI) eindeutig identifizierbar und authentifiziert sich beim Einbuchen gegenüber der Funkzelle, d.h. dass auch unmittelbar eine Authentifizierung des Mobilfunkendgerätes respektive des Teilnehmers dem das Mobilfunkendgerät zugeordnet ist, beim Einbuchen in das Mobilfunknetzwerk erfolgt.

Mit dem erfindungsgemäßen Verfahren und dem erfindungsgemäßen Mobilfunksystem ist es somit möglich, einen Bereich von geschlossenen Teilnehmergruppenidentitäten festzulegen (Closed Subscriber Group Identities - CSG ID) und diese generell oder temporär für einen offenen Netzzugang (Open Access) freizugeben.

Ein Ausführungsbeispiel der Erfindung ist in den Figuren dargestellt und wird nachfolgend näher erläutert. Es zeigen:
- Figur 1: ein Schema der Einbindung einer Gruppe von Zellen einer geschlossenen Teilnehmergruppe in ein Mobilfunknetzwerk und die Nutzung dieses Bereichs von Funkzellen durch ein Mobilfunkendgerät
- Figur 2 a: ein Beispiel einer 28 Bits umfassenden Zellkennung bei einem ersten Betriebsmodus;

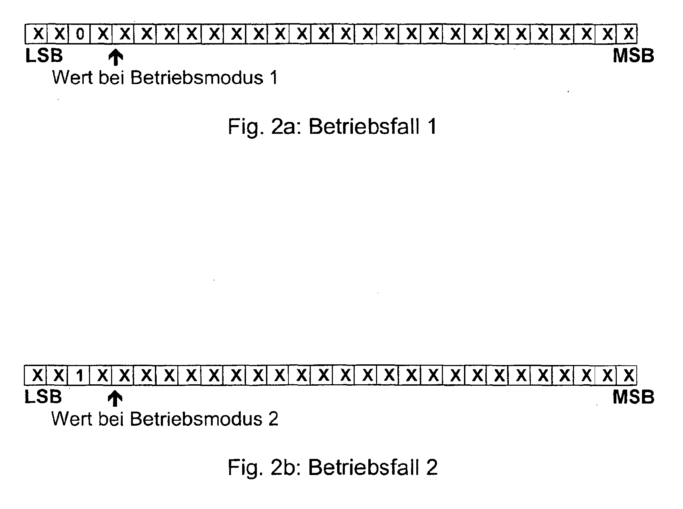

- Figur 2 b: die 28 Bit umfassende Zellkennung gemäß Figur 2a bei einem zweiten Betriebsmodus.

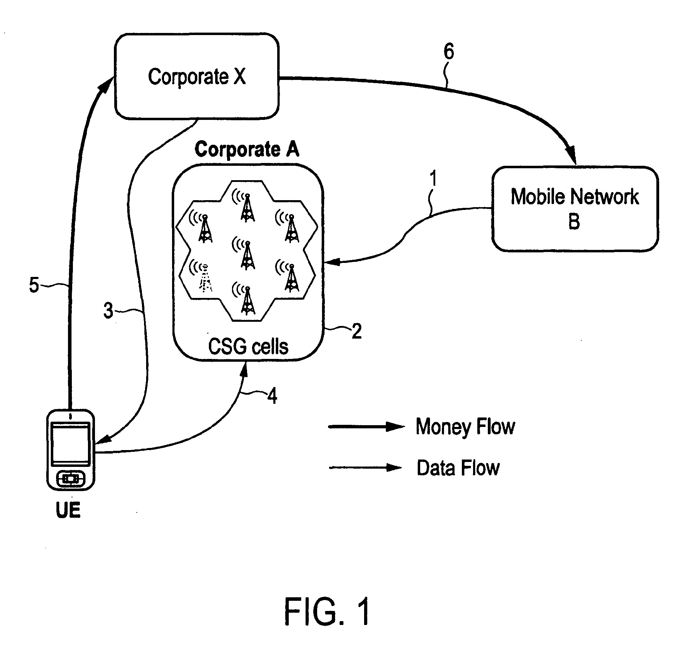

Bei dem in Figur 1 dargestellten schematischen Fall betreibt beispielsweise ein Unternehmen "Corporate A" einige Funkzellen 2, die von einem Mobilfunkbetreiber "Mobile Network Operator B" betrieben und zur Verfügung gestellt werden.

Das Unternehmen "Corporate A" betreibt dementsprechend die Zellen 2 um ein öffentliches oder alternativ firmeneigenes CSG- Netzwerk für eine geschlossene Teilnehmergruppe auszurollen oder zu betreiben. Gemäß der schematischen Darstellung nach Figur 1 erfolgt der Betrieb folgender Weise:
1. Der Mobilfunkbetreiber B "Mobile Network Operator B" stellt eine entsprechende Zellkennung (CSG ID) bereit, unter Anzeige dass ein öffentlicher Zugriff möglich ist (1).
2. Die Frequenzen, in welchen die CSG- Zellen des Unternehmens "Corporate A" betrieben werden, gehören dem Mobilfunkbetreiber B (Mobile Network Operator B), der die Zellen 2 zur Verfügung stellt.
3. Ein Mobilfunkendgerät, d.h. ein mobiles Endgerät UE (User Equipment) authentifiziert ein fremdes Unternehmen X "Corporate X", d.h. dass dieses nicht zu der geschlossenen Teilnehmergruppe des Betreibers A der Funkzellen 2, d.h. des Unternehmens Corporate A gehört.
4. Der Anwender des mobilen Endgerätes UE kann die CSG- Zellen 2 nutzen, wenn diese in dem entsprechenden Modus für einen offenen Netzzugang betrieben werden.
5. Für die Nutzung der von dem Unternehmen Corporate A betriebenen Zellen 2 zahlt der Anwender des Mobilfunkendgerätes UE an das Unternehmen X "Corporate X", dem das genutzte Mobilfunkendgerät UE als Nutzer zugeordnet ist die entsprechenden Nutzungsgebühren.
6. Das Unternehmen "Corporate X", welches das in den Zellen 2 genutzte Mobilfunkendgerät UE zur Verfügung gestellt hat und gegenüber dem es sich authentifiziert, zahlt dem Betreiber B (Mobile Network Operator B), welcher die Frequenzen der entsprechenden verwendeten und operierenden CSG-Zellen bereitstellt, entsprechende Nutzungsgebühren für die Nutzung der CSG- Zellen 2, die vom Dritten (Corporate A) im Netz des Mobilfunknetzbetreibers Mobile Network Operator B betrieben werden.

Dargestellt ist in Figur 1 somit einerseits das Betriebsschema sowie des weiteren der Datenfluss 1, 3 und 4 und der Zahlungsfluss 5,6 für die Nutzung der CSG-Zellen 2 innerhalb des Mobilfunknetzes des Mobilfunknetzbetreibers B.

In Figur 2 sind dargestellt zwei Beispiele eines Adressbereiches von 28 Bit Länge einer Zellkennung, d.h. eine CSG ID von Least Significant Bit (LSB) auf der linken Seite bis Most Significant Bit (MSB) auf der rechten Seite.

Dargestellt in den Figuren 2a und 2b sind zwei verschiedene Betriebsfälle, die nachfolgend erläutert werden.

Der CSG ID Adressbereich von 28 Bit Länge ist in zwei Bereiche unterteilt wie beispielsweise XX0XX...X zur Anwendung der Positivliste oder Whitelist, die in einem Mobilfunkendgerät gespeichert ist und andererseits XX1XX...X zur Signalisierung eines offenen Netzzugangs (Open Access). X kennzeichnet einen nicht näher definierten Zustand der Bits. Die Position des Bits welches auch eine Reihe von Bits sein könnte, wie auch der Zustand für die Auswertung 0 oder 1 ist hier rein zufällig gewählt.

In dem ersten Betriebsfall oder Betriebsmodus gemäß Figur 2a beginnt die Zellkennung (CSG ID) mit "XX0". Das Mobilfunkendgerät (UE) wird versuchen auf Zellen mit einer derartigen Zellkennung (CSG ID) beginnend mit ausgesendeten (broadcasted) "0" zuzugreifen, nur wenn die volle Zellkennung (CSG ID) in der Positivliste oder Whitelist von erlaubten Zellkennungen vorhanden ist. D.h. dass in diesem ersten Betriebsfall vor einem Einbuchen des Mobilfunkendgerätes in dieser Funkzelle ein Abgleich mit der in dem Mobilfunkendgerät abgespeicherten Weißen Liste (Whitelist) erfolgt.

Bei dem in Figur 2b dargestellten Betriebsfall bzw. Betriebsmodus beginnt die Zellkennung mit (CSG ID) mit "XX1". Das mobile Endgerät darf versuchen auf Zellen mit einer entsprechenden Zellkennung (CSG ID) beginnend mit ausgesendeten (broadcasted) "1" zuzugreifen, d.h. dass diese Zelle für einen offenen Netzzugang (Open Access) bereit steht.

Im dargestellten Beispiel wird somit das dritte Bit der insgesamt 28 Bit umfassenden Zellkennung CSG ID genutzt, um anzuzeigen, ob die jeweilige Funkzelle in einem ersten Betriebsmodus (Kennung "XX0") lediglich für eine geschlossene Teilnehmergruppe zur Verfügung steht oder aber im zweiten Betriebsfall mit der Zellkennung "XX1" einen offenen Zugang signalisiert und ein Einbuchen auch solcher Mobilfunkendgeräte in das Mobilfunknetzwerk gestattet, die nicht zur geschlossenen Teilnehmergruppe zählen.

Der Vorteil der erfindungsgemäßen Lösung liegt darin, dass es Anwendern anderer Unternehmen oder anderer Teilnehmergruppen ermöglicht, auf eine CSG-Zelle zuzugreifen, ohne die Involvierung des Heimatnetzes Home Public Land Mobile Network HPLMN und unabhängig vom Geschäftsmodell zwischen dem HPLMN der mobilen Endgeräte und des Public Land Mobile Network (PLMN), welche die Frequenzen und die Funktechnologie zwecks Netzabdeckung zur Verfügung stellen.

Eine Identifikation, d.h. eine Unterscheidung ob eine Nutzung der Netzdienste möglich ist oder nicht, kann somit auf sehr einfache, jedoch zuverlässige Weise dadurch realisiert werden, dass mittels der ausgesendeten Zellkennung CSG ID signalisiert wird, ob die jeweilige Funkzelle für eine geschlossene Teilnehmergruppe beschränkt ist oder für einen offenen Netzzugang (Open Access) bereit steht.

## Patentansprüche

1. Verfahren zum Betrieb einer oder mehrerer Funkzellen eines zellularen Mobilfunknetzes, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste von zugelassenen Zellkennungen in die jeweilige Funkzelle zur Nutzung der Dienste des Mobilfunknetzes einbuchen, **dadurch gekennzeichnet, dass** die Zellkennung variabel ist und anhand der Zellkennung feststellbar ist, ob ein Einbuchen und eine Nutzung der Netzdienste momentan auf die geschlossene Teilnehmergruppe beschränkt ist oder ob alternativ ein Einbuchen und eine Nutzung der Netzdienste für beliebige Teilnehmer freigegeben ist.

2. Verfahren nach Anspruch 1, **dadurch gekennzeichnet, dass** die Zellkennung variabel ist, indem ein Bit oder mehrere Bits oder eine Reihe von Bits der Zellkennung variiert wird/werden, insbesondere dass die Zellkennung eine Länge von 28 Bits aufweist.

3. Verfahren nach Anspruch 1 oder 2, **dadurch gekennzeichnet, dass** ein Abgleich mit der in dem Mobilfunkendgerät gespeicherten Positivliste von zugelassenen Zellkennungen unterbleibt, wenn ein bestimmtes Bit oder mehrere bestimmte Bits oder eine bestimmte Reihe von Bits der Zellkennung einen bestimmten Wert aufweisen.

4. Verfahren nach einem der vorherigen Ansprüche, **dadurch gekennzeichnet, dass** das Mobilfunkendgerät mittels einer Teilnehmeridentität eindeutig identifizierbar ist und sich beim Einbuchen gegenüber der Funkzelle authentifiziert.

5. Zellulares Mobilfunksystem, insbesondere zur Ausführung und Anwendung eines Verfahrens nach einem der vorherigen Ansprüche, aufweisend ein Mobilfunknetzwerk mit einer Mehrzahl von Funkzellen, in denen sich Mobilfunkendgeräte zur Nutzung der Dienste des Mobilfunksystems einbuchen können, wobei jede Funkzelle durch eine ausgesandte Zellkennung identifizierbar ist, wobei die Nutzung auf eine geschlossene Teilnehmergruppe beschränkbar ist, indem die Funkzelle eine entsprechende Kennung aufweist und sich Mobilfunkendgeräte nur nach einem positiven Abgleich mit einer in dem Mobilfunkendgerät gespeicherten Positivliste von zugelassenen Zellkennungen in die jeweilige Funkzelle zur Nutzung der Dienste des Mobilfunknetzes einbuchen, **dadurch gekennzeichnet, dass** die Zellkennung variabel ist und anhand der Zellkennung feststellbar ist, ob ein Einbuchen und eine Nutzung der Netzdienste momentan auf die geschlossene Teilnehmergruppe beschränkt ist oder ob alternativ ein Einbuchen und eine Nutzung der Netzdienste für beliebige Teilnehmer freigegeben ist.

6. System nach Anspruch 5, **dadurch gekennzeichnet, dass** die Zellkennung variabel ist, indem ein Bit oder mehrere Bits oder eine Reihe von Bits der Zellkennung variiert wird/werden, insbesondere dass die Zellkennung eine Länge von 28 Bits aufweist.

7. System nach Anspruch 5 oder 6, **dadurch gekennzeichnet, dass** ein Abgleich mit der in dem Mobilfunkendgerät gespeicherten Positivliste von zugelassenen Zellkennungen unterbleibt, wenn ein bestimmtes Bit oder mehrere bestimmtes Bits oder eine bestimmte Reihe von Bits der Zellkennung einen bestimmten Wert aufweisen.

8. System nach einem der Ansprüche 5 bis 7, **dadurch gekennzeichnet, dass** das Mobilfunkendgerät mittels einer Teilnehmeridentität eindeutig identifizierbar ist und sich beim Einbuchen gegenüber der Funkzelle authentifiziert.

## Claims

1. Method for operating one or more radio cells in a cellular mobile radio network, wherein each radio cell can be identified by an emitted cell identifier, wherein use can be limited to a closed subscriber group by virtue of the radio cell having an appropriate identifier and mobile radio terminals registering with the respective radio cell to use the services of the mobile radio network only following a positive comparison with a positive list of permitted cell identifiers that is stored in the mobile radio terminal, **characterized in that** the cell identifier is variable and the cell identifier can be used to establish whether registration and use of the network services is currently limited to the closed subscriber group or whether alternatively registration and use of the network services is enabled for any subscribers.

2. Method according to Claim 1, **characterized in that** the cell identifier is variable by virtue of a bit or a plurality of bits or a series of bits of the cell identifier being varied, particularly **in that** the cell identifier has a length of 28 bits.

3. Method according to Claim 1 or 2, **characterized in that** a comparison with the positive list of permitted cell identifiers that is stored in the mobile radio terminal does not take place if a particular bit or a plurality of particular bits or a particular series of bits of the cell identifier has/have a particular value.

4. Method according to one of the preceding claims, **characterized in that** the mobile radio terminal can be explicitly identified by means of a subscriber identity and authenticates itself to the radio cell during registration.

5. Cellular mobile radio system, particularly for carrying out and using a method according to one of the preceding claims, having a mobile radio network having a plurality of radio cells with which mobile radio terminals can register to use the services of the mobile radio system, wherein each radio cell can be identified by an emitted cell identifier, wherein use can be limited to a closed subscriber group by virtue of the radio cell having an appropriate identifier and mobile radio terminals registering with the respective radio cell to use the services of the mobile radio network only following a positive comparison with a positive list of permitted cell identifiers that is stored in the mobile radio terminal, **characterized in that** the cell identifier is variable and the cell identifier can be used to establish whether registration and use of the network services is currently limited to the closed subscriber group or whether alternatively registration and use of the network services is enabled for any subscribers.

6. System according to Claim 5, **characterized in that** the cell identifier is variable by virtue of a bit or a plurality of bits or a series of bits of the cell identifier being varied, particularly **in that** the cell identifier has a length of 28 bits.

7. System according to Claim 5 or 6, **characterized in that** a comparison with the positive list of permitted cell identifiers that is stored in the mobile radio terminal does not take place if a particular bit or a plurality of particular bits or a particular series of bits of the cell identifier has/have a particular value.

8. System according to one of Claims 5 to 7, **characterized in that** the mobile radio terminal can be explicitly identified by means of a subscriber identity and authenticates itself to the radio cell during registration.

## Revendications

1. Procédé pour faire fonctionner une ou plusieurs cellules radio d'un réseau de radiocommunication mobile cellulaire, chaque cellule radio pouvant être identifiée par un identifiant de cellule émis, l'utilisation pouvant être limitée à un groupe fermé d'abonnés en ce que la cellule radio présente un identifiant en conséquence et les terminaux de radiocommunication mobile ne s'enregistrent dans la cellule radio correspondante en vue d'utiliser les services du réseau de radiocommunication mobile qu'après un accord positif avec une liste positive d'identifiants de cellule autorisés mise en mémoire dans le terminal de radiocommunication mobile, **caractérisé en ce que** l'identifiant de cellule est variable et l'identifiant de cellule permet de définir si un enregistrement et une utilisation des services du réseau sont momentanément limités au groupe fermé d'abonnés ou si, en variante, un enregistrement et une utilisation des services du réseau sont libérés pour n'importe quel abonné.

2. Procédé selon la revendication 1, **caractérisé en ce que** l'identifiant de cellule est variable en faisant varier un bit ou plusieurs bits ou une série de bits de l'identifiant de cellule, notamment **en ce que** l'identifiant de cellule présente une longueur de 28 bits.

3. Procédé selon la revendication 1 ou 2, **caractérisé en ce qu'**un accord avec la liste positive d'identifiants de cellule autorisés mise en mémoire dans le terminal de radiocommunication mobile est inhibé lorsqu'un bit donné ou plusieurs bits donnés ou encore une série donnée de bits de l'identifiant de cellule présentent une valeur donnée.

4. Procédé selon l'une des revendications précédentes, **caractérisé en ce que** le terminal de radiocommunication mobile peut être identifié de manière univoque au moyen d'une identité d'abonné et s'authentifie auprès de la cellule radio lors de l'enregistrement.

5. Système de radiocommunication mobile cellulaire, notamment pour mettre en oeuvre et utiliser un procédé selon l'une des revendications précédentes, présentant un réseau de radiocommunication mobile comprenant une pluralité de cellules radio dans lesquelles peuvent s'enregistrer des terminaux de radiocommunication mobile en vue d'utiliser les services du réseau de radiocommunication mobile, chaque cellule radio pouvant être identifiée par un identifiant de cellule émis, l'utilisation pouvant être limitée à un groupe fermé d'abonnés en ce que la cellule radio présente un identifiant en conséquence et les terminaux de radiocommunication mobile ne s'enregistrent dans la cellule radio correspondante en vue d'utiliser les services du réseau de radiocommunication mobile qu'après un accord positif avec une liste positive d'identifiants de cellule autorisés mise en mémoire dans le terminal de radiocommunication mobile, **caractérisé en ce que** l'identifiant de cellule est variable et l'identifiant de cellule permet de définir si un enregistrement et une utilisation des services du réseau sont momentanément limités au groupe fermé d'abonnés ou si, en variante, un enregistrement et une utilisation des services du réseau sont libérés pour n'importe quel abonné.

6. Système selon la revendication 5, **caractérisé en ce que** l'identifiant de cellule est variable en faisant varier un bit ou plusieurs bits ou une série de bits de l'identifiant de cellule, notamment **en ce que** l'identifiant de cellule présente une longueur de 28 bits.

7. Système selon la revendication 5 ou 6, **caractérisé en ce qu'**un accord avec la liste positive mise en mémoire dans le terminal de radiocommunication mobile est inhibé lorsqu'un bit donné ou plusieurs bits donnés ou encore une série donnée de bits de l'identifiant de cellule présentent une valeur donnée.

8. Système selon l'une des revendications 5 à 7, **caractérisé en ce que** le terminal de radiocommunication mobile peut être identifié de manière univoque au moyen d'une identité d'abonné et s'authentifie auprès de la cellule radio lors de l'enregistrement.
